Europäisches Patentamt

European Patent Office

Office européen des brevets

(19)

(11) Veröffentlichungsnummer : **0 505 416 B1**

(12) **EUROPÄISCHE PATENTSCHRIFT**

(45) Veröffentlichungstag der Patentschrift :
22.06.94 Patentblatt 94/25

(51) Int. Cl.$^5$ : **B60T 8/60,** B60T 8/66

(21) Anmeldenummer : 91900767.4

(22) Anmeldetag : 10.12.90

(86) Internationale Anmeldenummer :
PCT/EP90/02138

(87) Internationale Veröffentlichungsnummer :
WO 91/08935 27.06.91 Gazette 91/14

(54) **ANTIBLOCKIERREGELSYSTEM.**

(30) Priorität : 16.12.89 DE 3941655

(43) Veröffentlichungstag der Anmeldung :
30.09.92 Patentblatt 92/40

(45) Bekanntmachung des Hinweises auf die
Patenterteilung :
22.06.94 Patentblatt 94/25

(84) Benannte Vertragsstaaten :
DE FR GB SE

(56) Entgegenhaltungen :
EP-A- 0 381 957
DE-A- 3 114 026
DE-C- 2 705 737
US-A- 3 840 278
US-A- 4 005 911
US-A- 4 154 487
US-A- 4 593 955

(73) Patentinhaber : **ROBERT BOSCH GMBH**
**Postfach 30 02 20**
**D-70442 Stuttgart (DE)**

(72) Erfinder : **VAN ZANTEN, Anton**
**Waldstrasse 15/2**
**D-7257 Ditzingen 4 (DE)**
Erfinder : **MAIER, Rolf**
**Mozartstrasse 3**
**D-7053 Kernen (DE)**
Erfinder : **KREISSELMEIER, Gerhard**
**Brandaustrasse 10**
**D-3501 Ahnatal (DE)**

(74) Vertreter : **Kammer, Arno, Dipl.-Ing.**
**ROBERT BOSCH GmbH,**
**Zentralabteilung Patente,**
**Postfach 30 02 20**
**D-70442 Stuttgart (DE)**

EP 0 505 416 B1

## Beschreibung

Stand der Technik

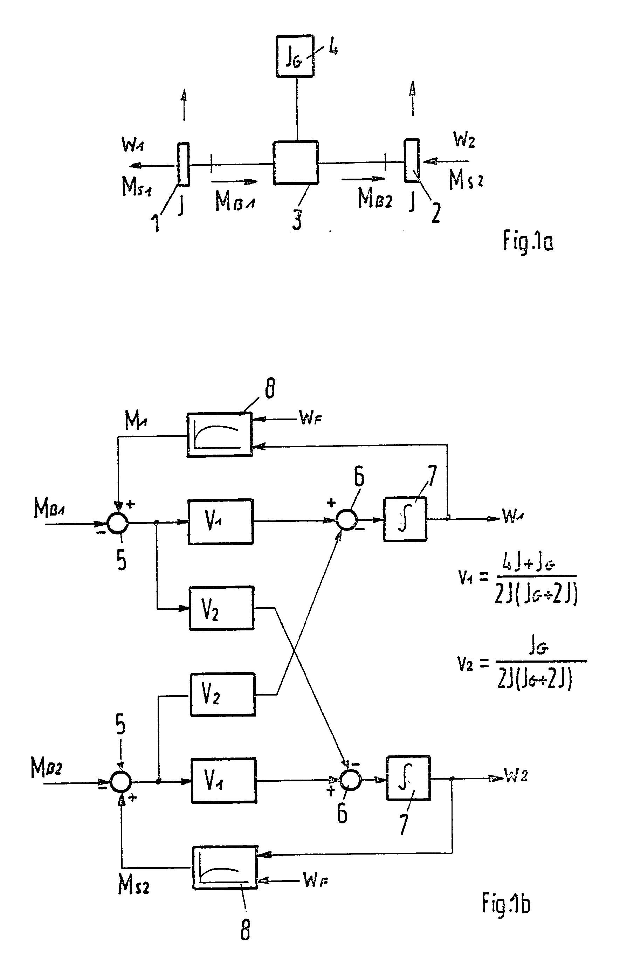

Zwischen den angetriebenen Rädern eines Fahrzeugs werden - infolge ihrer Kopplung über ein Differential - Momente übertragen. Dies zeigt Fig. 1a. Dort sind die Antriebsräder mit 1 und 2 bezeichnet, das Differential mit 3 und das Getriebe mit 4. Die Raddrehzahlen sind mit $\omega_1$ und $\omega_2$, die Bremsmomente mit $M_{B1}$ und $M_{B2}$ und die Antriebsmomente mit $M_{S1}$ und $M_{S2}$ bezeichnet. J sind die Massenträgheitsmomente. Fig. 1b zeigt die Anordnung der Fig. 1a in regelungstechnischer Darstellung. Die Größen $V_1$ und $V_2$ sind Verstärkungsfaktoren. Man erkennt, daß die Differenz der Momente (bei 5) sowohl zum zugehörigen Rad als auch mit anderer Verstärkung zum anderen Rad gelangt und dort dem Differenzmoment des jeweiligen Rads überlagert wird (bei 6). Die Verstärkungsfaktoren sind formelmäßig angegeben. Die Integratoren 7 setzen die Momente in Raddrehzahlen $\omega_1$ und $\omega_2$ um. Die Schlupfregler 8 beeinflussen die Antriebsmomente $M_{S1}$ und $M_{S2}$.

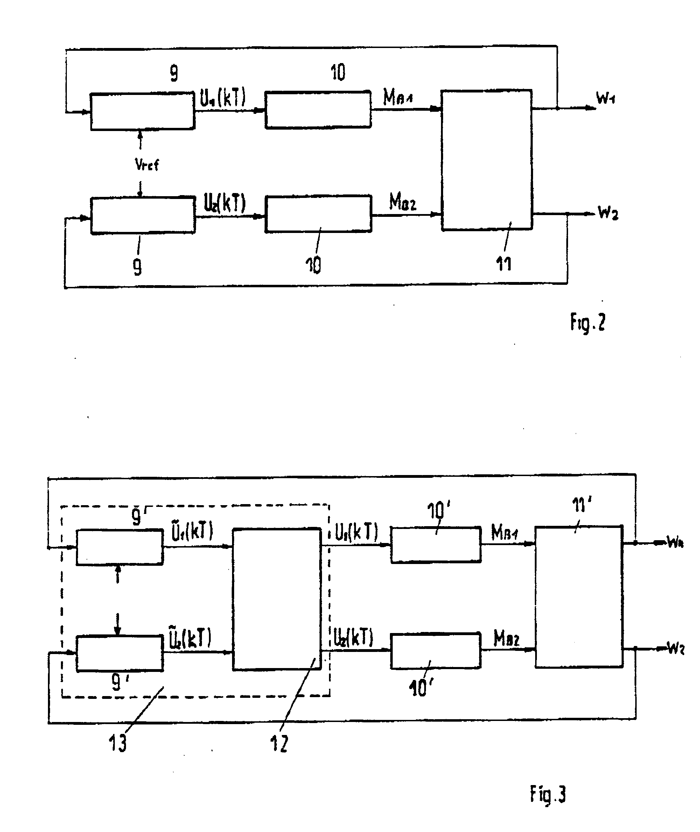

In bisherigen ABS-Regelkonzepten werden diese Kopplungsmomente nicht berücksichtigt, wie dies Fig. 2 zeigt. Hier sind Einzelradregler 9 und Stellglieder 10 dargestellt. Block 11 enthält hier sowohl die Regelstrecke mit der (internen) Verkopplung der beiden Radmomente als auch die beiden Drehzahlfühler für die Antriebsräder. Insbesondere bei eingelegter Fahrstufe bekommt diese Verkopplung deutlichen Einfluß und kann bei ABS-Bremsungen das Regelverhalten beeinträchtigen.

Aus der US-PS 4 005 911 ist ein Antiblockierregelsystem für die Räder einer Achse bekannt, bei dem die beiden Kanalausgänge miteinander verkoppelt sind. Bei Regelung an einem Rad wird Bremsdruck am anderen Rad verlangsamt aufgebaut, um ein hohes Giermoment zu vermeiden.

Vorteile der Erfindung

Diese Nachteile lassen sich vermeiden, indem man erfindungsgemäß die angetriebenen Räder nicht als unabhängige einzelne Regelstrecken, sondern als ein Mehrgrößensystem betrachtet und dementsprechend einen Mehrgrößenregler für dessen Regelung entwirft. Dadurch wird sowohl die Regelgüte verbessert, als auch die Stabilität des Regelkreises erhöht. Die zu beschreibenden Konzepte sind so ausgelegt, daß herkömmliche ABS-Regelalgorithmen weitgehend verwendet werden können.

Die im folgenden beschriebenen Konzepte ergänzen die herkömmlichen Einzelradregler durch ein Entkopplungssystem zu einem Mehrgrößenregler. Das erste zu beschreibende Konzept betrifft die Reihenentkopplung. Der Grundgedanke ist hier, den Einzelradreglern ein Entkopplungssystem nachzuschalten, um die Räderkopplung wenigstens teilweise zu kompensieren. Dies zeigt in Prinzipdarstellung die Fig. 3, die sonst weitgehend mit Fig. 2 übereinstimmt (durch gestrichene Bezugszeichen berücksichtigt). Das zusätzlich dargestellte Entkopplungssystem 12 bildet mit den Einzelradreglern 9′ einen Zweigrößenregler 13.

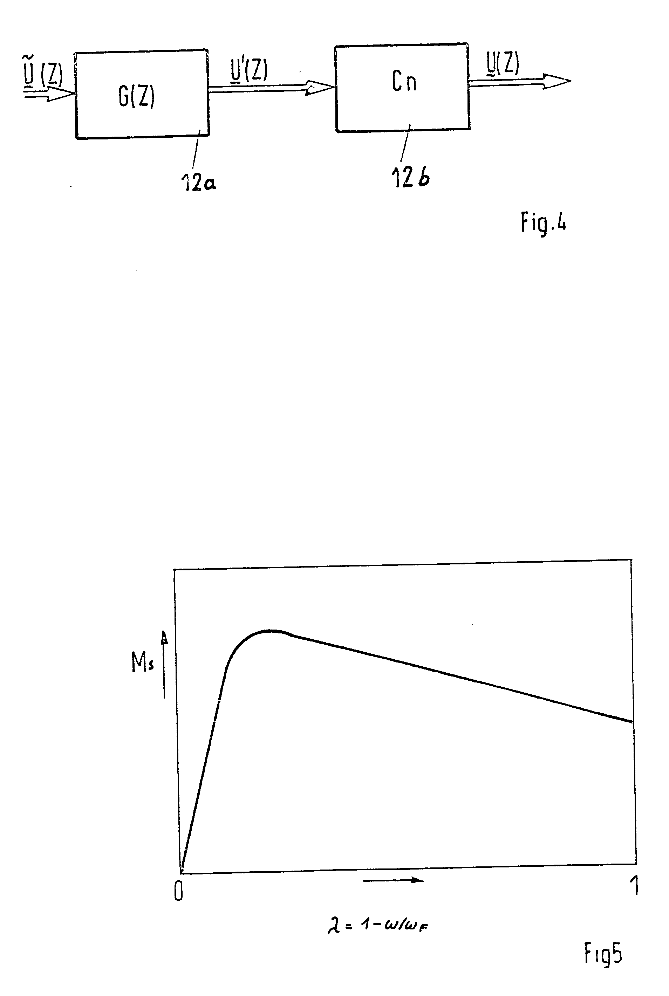

Die Ausgangsgrößen der Einzelradregler 9′ sind Signale, die dem Bremsmoment oder der Bremsmomentänderung proportional sind. Das Entkopplungssystem 12 kann aus einem linearen Zweigrößensystem 12a und einem nachgeschalteten Verstärkungsglied 12b mit Verstärkungsfaktor $C_n$ bestehen, wie in Fig. 4 dargestellt. Das lineare Zweigrößensystem hat die Aufgabe, das um einen bestimmten Arbeitspunkt linearisierte System zu entkoppeln.

Im Frequenzbereich (Bildbereich der z-Transformation) kann es durch

$$\underline{u}'(z) = G(z) * \underline{\tilde{u}}(z)$$

dargestellt werden. Es sind

$$G(z) = \begin{bmatrix} G1(z) & G2(z) \\ G2(z) & G1(z) \end{bmatrix} \quad \dots \text{ Übertragungsmatrix,}$$

$\underline{\tilde{u}}(z) = [\tilde{u}1(z)\ \tilde{u}2(z)]^T$ ... Vektor der Ausgangssignale der Einzelradregler und
$\underline{u}'(z) = [u1'(z)\ u2'(z)]^T$ ... Vektor der Ausgangsgrößen, die das System entkoppeln.

Die rationalen Funktionen G1(z) und G2(z) werden so gewählt, daß für typische Arbeitspunkte der Regelung eine gute Entkopplung im Führungsübertragungsverhalten besteht. Die Festlegung dieser Funktionen kann experimentell geschehen. Dabei kann man z.B. so vorgehen, daß man für das eine Rad einen konstanten Sollwert vorgibt, für das andere jedoch einen Sollwertsprung. G1(z) und G2(z) sollen so ausgelegt werden, daß das Rad mit konstantem Sollwert durch das andere Rad möglichst wenig gestört wird. Liegt ein genaues Streckenmodell vor, dann können G1(z) und G2(z) so bestimmt werden, daß die Koppelterme in der Führungs-

2

übertragungsfunktion verschwinden. Ein wichtiger Sonderfall der Übertragungsmatrix G(z) ist die statische Entkopplungsmatrix

$$G(z) = \begin{bmatrix} g1 & g2 \\ g2 & g1 \end{bmatrix} \quad , \; g1, \; g2 = const.$$

Bei geeigneter Wahl von g1 und g2 wird das System gut entkoppelt, wenn beide Räder am Maximum der $\mu$-Schlupf-Kurve (Fig. 5) geregelt werden. Es ist dann:

$$\underline{u}'_1 = (g_1 * \underline{\tilde{u}}_1 + g_2 * \underline{\tilde{u}}_2)$$

bzw.

$$\underline{u}'_2 = (g_2 * \underline{\tilde{u}}_1 + g_1 * \underline{\tilde{u}}_2).$$

Das nachgeschaltete Verstärkungsglied 12b mit dem Verstärkungsfaktor $C_n$ berücksichtigt eine mögliche Nichtlinearität der Stellglieder (Stellgrößenbeschränkung). Werden als Einzelregler z.B. Algorithmen benutzt, wie sie aus DE-OS 37 31 075 und WO 86/07321 bekannt sind, so sind die den Stellgliedern zugeführten Signale u1(kT), u2(kT) Ventilöffnungszeiten. Diese werden durch die Dauer eines Abtastzyklus begrenzt. Um zu vermeiden, daß durch diese Begrenzung die Entkopplung gestört wird, führt das Verstärkungsglied vorab eine Begrenzung durch, gemäß der Vorschrift

$$\underline{u}(kT) = Cn(\underline{u}'(kT)) * \underline{u}'(kT)$$

mit

$$Cn(\underline{u}'(kT)) = \frac{T}{max(T, |\underline{u}'_1(kT)|, |\underline{u}'_2(kT)|)}$$

T ... Abtastperiode,
$\underline{u}'$ ... Eingangsvektor ins Verstärkungsglied 12b,
$\underline{u}$ ... Stellsignal.

Neben dem Einfluß der Begrenzung der Stellgröße kann in $C_n$ auch der Einfluß unterschiedlicher Druckänderungsraten (z.B. infolge unterschiedlicher Rad-Dremsdrucke) in den Radbremszylindern berücksichtigt werden.

Eine weitere Möglichkeit für die Entkopplung der Räder einer Antriebsachse besteht in zwei parallelgeschalteten Reglern:

Auch bei diesem Konzept soll durch Ergänzung eines herkömmlichen Einzelradreglers die Kopplung zweier Antriebsräder über ein Differential berücksichtigt werden.

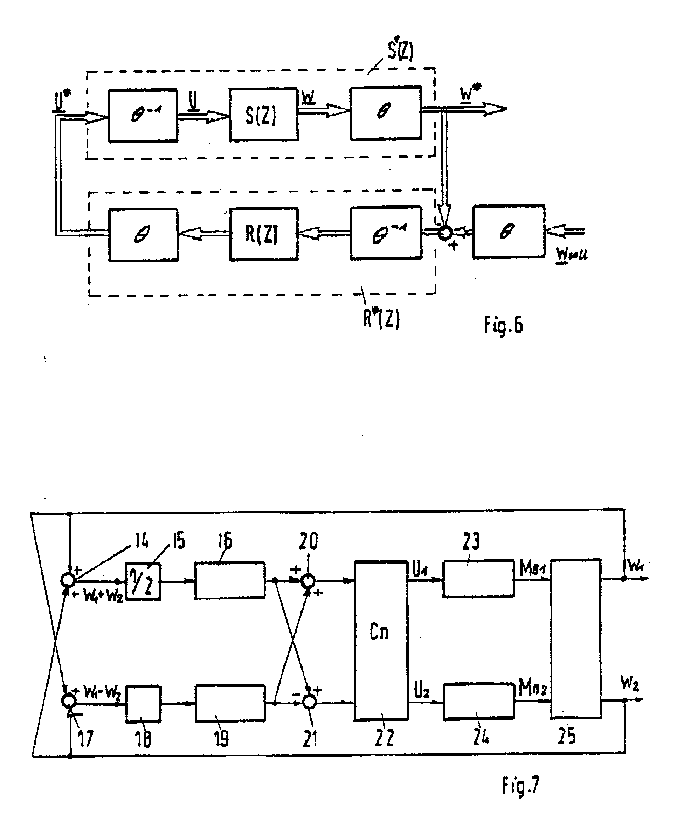

Dazu wird hier ein anderes Verfahren der Mehrgrößenregelung eingesetzt, nämlich die Transformation der Regelstrecke. Dies erlaubt es - entsprechend der Anzahl der Regelgrößen - unabhängige Einzelregler zu entwerfen, vereinfacht also die Reglerauslegung. Ein solches Konzept ist in Fig. 6 gezeigt. Im Falle der Regelung zweier angetriebener Räder eignet sich die Transformation

$$\underline{\omega}^* = \Theta * \underline{\omega} \; , \quad \underline{\omega} = [\omega_1 \; , \; \omega_2]^T \quad ... \text{ Raddrehgeschwindigkeiten,}$$
$$\underline{\omega}^* = [\omega_1^* \; , \; \omega_2^*]^T \quad ... \text{ transformierte Regelgrößen}$$

$$\Theta = \frac{1}{2} * \begin{bmatrix} 1 & 1 \\ 1 & -1 \end{bmatrix}$$

bzw.

$$\underline{u} = \Theta^{-1} * \underline{u}^* , \quad \underline{u} = [u1 \quad u2]^T \quad ... \text{ Stellsignal,}$$
$$\underline{u}^* = [u1^* \quad u2^*]^T \quad ... \text{ transformiertes Stellsignal,}$$

$$\theta^{-1} = \begin{bmatrix} 1 & 1 \\ 1 & -1 \end{bmatrix}$$

Diese Transformation entspricht der getrennten Regelung der Summen- und Differenzraddrehzahl. Eine solche Regleranordnung zeigt Fig. 7.

Regeln beide Räder um Arbeitspunkte mit gleicher Steigung der µ-Schlupf-Kurve (Fig. 5), dann sind die transformierten Regelgrößen entkoppelt. In einem Addierer 14 wird die Summe ($\omega_1 + \omega_2$) der Drehzahlen gebildet (= 2 x Drehzahl der Kardanwelle). Der Dividierer 15 bildet daraus die Drehzahl der Kardanwelle, sodaß ($\omega_1 + \omega_2$)/2 auch direkt an der Kardanwelle meßbar ist. Es folgt ein Einzelradregler 16, (vergleichbar mit Selectlow-Regler bei 3-Kanal ABS) der vorzugsweise als Ausgangsgröße Bremsmomenten entsprechende Signale abgibt.

In einem Subtrahierer 17 wird die Differenz ($\omega1 - \omega2$) erzeugt, die ebenfalls halbiert wird (Block 18) und einem Regler 19 zugeführt wird, der ein PI-Regler sein kann, jedoch auch noch Totzeiten und dgl. berücksichtigen kann. Die Ausgänge der Regler 16 und 19 werden einem Addierer 20 bzw. einem Subtrahierer 21 zugeführt. Die Ausgangssignale werden über einen eine Stellgrößenbeschränkung bewirkenden Verstärker 22 mit dem Verstärkungsfaktor $C_n$ geführt (Wirkungsweise sh. oben). Dessen Ausgangssignale sind wieder Ventilöffnungszeiten $u_1$ und $u_2$. Diese wirken auf Stellglieder (Ventile für die beiden Radbremsen) ein und variieren die Bremsdrücke und damit die Bremsmomente $M_{B1}$ bzw. $M_{B2}$. Über die Regelstrecke (Block 25) werden hierdurch die Raddrehzahlen $\omega_1$ und $\omega_2$ geändert; die im Block 25 enthaltenen Sensoren messen die neuen Drehzahlen.

Das zuletzt beschriebene Konzept kann auch bei Differentialen mit Sperrwirkung eingesetzt werden.

Beide Konzepte zur Mehrgrößenregelung können sinngemäß auf Fahrzeuge mit Allradantrieb übertragen werden.

Definitionen:

| | |
|---|---|
| $J_G$ | ... auf Raddrehzahl reduziertes Trägheitsmoment des Antriebsstranges bis Differential |
| $J$ | ... Massenträgheitsmoment eines Rades |
| $\omega$ | ... Raddrehgeschwindigkeit |
| $M_S$ | ... antreibendes Straßenreibmoment |
| $M_B$ | ... Bremsmoment |
| $\omega_F$ | ... freirollende Raddrehgeschwindigkeit |
| r | ... dynamischer Radradius |
| $\theta$ | ... Transformationsmatrix |
| $\theta^{-1}$ | ... inverse Transformationsmatrix |
| $S(z)$ | ... Übertragungsmatrix der Strecke |
| $S*(z)$ | ... Übertragungsmatrix der transformierten Strecke (Diagonalmatrix) |
| $R(z)$ | ... Mehrgrößenregler (i.a. nicht-diagonal) |
| $R*(z)$ | ... zu entwerfender Regler (Diagonalmatrix mit unabhängigen Eingrößenregler auf der Diagonalen) |

**Patentansprüche**

1. Antiblockierregelsystem für die angetriebenen Räder einer Achse enthaltend Sensoren (in 11') zur Bestimmung der Radgeschwindigkeit, eine zweikanalige Auswerteschaltung (9'), der die Radgeschwindigkeitssignale zugeführt werden und die Bremsdrucksteuersignale erzeugt und Bremsdrucksteuereinrichtungen (10') zur Variation des Bremsdrucks im Sinne eines Verhinderns blockierter Räder, wobei zwischen den Kanälen (9') eine elektronische Verkopplung (12) vorgesehen ist, <u>dadurch gekennzeichnet</u>, daß den beiden Kanälen (9') zur wenigstens teilweisen Kompensation der Räder/hopplung als elektronische Verkopplung ein die Auswerteschaltung (9') zu einem Zweigrößenregler ergänzendes Entkopplungssystem (12) nachgeschaltet ist, daß dieses Entkopplungssystem (12) eine Übertragungsmatrix G(z) aufweist, deren Glieder G1(z) und G2(z) seine Ausgangsgrößen $\underline{u}'_1(z)$ und $\underline{u}'_2(z)$ gemäß den Beziehungen

$\underline{u}'_1(z) = G1(z)* \underline{\tilde{u}}_1(z) + G2(z)* \underline{\tilde{u}}_2(z)$ bzw. $\underline{u}'_2(z) = G2(z)* \underline{\tilde{u}}_1(z) + G1(z) \underline{\tilde{u}}_2(z)$ bestimmen, wobei

$\tilde{\underline{u}}'_1$ (z) und $\tilde{\underline{u}}'_2$ (z) die analogen Ausgangssignale der Kanäle (9') sind und die Glieder G1(z) und G2(z) im Sinne einer guten Entkopplung festgelegt sind.

2. Antiblockierregelsystem nach Anspruch 1, dadurch gekennzeichnet, daß die Glieder der Matrix Konstante sind.

3. Antiblockierregelsystem nach Anspruch 1 oder 2, dadurch gekennzeichnet, daß die Glieder der Matrix experimentell ermittelt werden.

4. Antiblockierregelsystem nach einem der Ansprüche 1 - 3, dadurch gekennzeichnet, daß das Entkopplungssystem (12) aus einem linearen Zweigrößensystem (12a) und einem nachgeschalteten Ausgangssignal in gleichem Maße beeinflussender Verstärker (12b) besteht, dessen Verstärkungsfaktor von der Größe der Ausgangssignale des Entkopplungssystems abhängig ist derart, daß er mit Anwachsen eines der Ausgangssignale kleiner wird.

5. Antiblockierregelsystem für die angetriebenen Räder einer Achse enthaltend Sensoren (in 25) zur Bestimmung der Radgeschwindigkeit, eine zweikanalige Auswerteschaltung (16, 19), der die Radgeschwindigkeitssignale zugeführt werden und die Bremsdrucksteuersignale erzeugt und Bremsdrucksteuereinrichtungen (23, 24) zur Variation des Bremsdrucks im Sinne eines Verhinderns blockierter Räder, dadurch gekennzeichnet, daß als Eingangsgröße dem einen Kanal (16) eine der Summe und dem anderen Kanal (19) eine der Differenz der beiden Geschwindigkeitssignale entsprechende Größe zugeführt wird, daß der Regler des ersten Kanals (16) ein Einzelradregler (z.B. Schlupfregler) ist und der Regler des zweiten Kanals (19) eine Regelkennlinie aufweist, die wenigstens proportionale und integrale Anteile aufweist und daß das Stellsignal für das Stellglied (23) des ersten Kanals durch Addition der Ausgangssignale der beiden Regler (16, 19) und das Stellsignal für das Stellglied (24) des zweiten Kanals durch Subtraktion der Ausgangssignale der beiden Regler (16, 19) gebildet werden.

6. Antiblockierregelsystem nach Anspruch 5, dadurch gekennzeichnet, daß den Stellgliedern ein beide Stellsignale in gleichem Maße beeinflussender Verstärker (22) vorgeschaltet ist, dessen Verstärkungsfaktor $C_n$ von der Größe der Stellsignale abhängig ist derart, daß er mit Anwachsen eines der Ausgangssignale kleiner wird.

7. Antiblockierregelsystem nach Anspruch 5 oder 6, dadurch gekennzeichnet, daß der Regler des zweiten Kanals (19) ein nichtlinearer PI-Abtastregler ist.

## Claims

1. Antiblock system for the driven wheels of an axle containing sensors (11') for determining the wheel speed, a two-channel evaluation circuit (9') to which the wheel speed signals are fed and which generates brake pressure control signals, and brake pressure control devices (10') for varying the brake pressure in order to prevent blocked wheels, electronic coupling (12) being provided between the channels (9'), characterized in that for the purpose of at least partial compensation of the wheel coupling a decoupling system (12) which supplements the evaluation circuit (9') to form a two-variable controller is connected as electronic coupling downstream of the two channels (9'), in that this decoupling system (12) has a transfer matrix G(z) whose elements G1(z) and G2(z) determine its output variables $\underline{u}'_1(z)$ and $\underline{u}'_2(z)$ in accordance with the relationships $\underline{u}'_1(z) = G1(z)*u_1(z) + G2(z)*u_2(z)$ or $\underline{u}'_2(z) = G2(z)*u_1(z) + G1(z)\underline{u}_2(z)$, $\underline{u}'_1(z)$ and $\underline{u}'_2(z)$ being the analog output signals of the channels (9'), and the elements G1(z) and G2(z) being fixed for the purpose of effective decoupling.

2. Antiblock system according to Claim 1, characterized in that the elements of the matrix are constants.

3. Antiblock system according to Claim 1 or 2, characterized in that the elements of the matrix are determined experimentally.

4. Antiblock system according to one of Claims 1-3, characterized in that the decoupling system (12) consists of a linear two-variable system (12a) and a downstream amplifier (12b) which influences the output signal to the same extent and whose gain depends on the magnitude of the output signals of the decoupling system in such a way that it becomes smaller with an increase in one of the output signals.

5. Antiblock system for the driven wheels of an axle containing sensors (25) for determining the wheel speed, a two-channel evaluation circuit (16, 19) to which the wheel speed signals are fed and which generates brake pressure control signals, and brake pressure control devices (23, 24) for varying the brake pressure in order to prevent blocked wheels, characterized in that one channel (16) is fed as input value a variable corresponding to the sum, and the other channel (19) is fed as input value a variable corresponding to the difference of the two speed signals, in that the controller of the first channel (16) is an individual wheel controller (for example slip controller) and the controller of the second channel (19) has a control characteristic which has at least proportional and integral components, and in that the actuating signal for the actuator (23) of the first channel is formed by addition of the output signals of the two controllers (16, 19) and the actuating signal for the actuator (24) of the second channel by subtraction of the output signals of the two controllers (16, 19).

6. Antiblock system according to Claim 5, characterized in that connected upstream of the actuators is an amplifier (22) which influences both actuating signals to the same extent and whose gain $C_n$ depends on the magnitude of the actuating signals in such a way that it becomes smaller with an increase in one of the output signals.

7. Antiblock system according to Claim 5 or 6, characterized in that the controller of the second channel (19) is a nonlinear PI scanning controller.

## Revendications

1. Dispositif régulateur d'anti-blocage pour les roues motrices d'un essieu contenant des détecteurs (en 11′) pour déterminer la vitesse des roues, un circuit d'exploitation à deux canaux (9′), auquel sont amenés les signaux des vitesses des roues et qui produit les signaux de commande des pressions de freinage et des dispositifs servant à commander les pressions de freinage (10′) pour faire varier la pression de freinage en vue d'empêcher les roues de se bloquer, un couplage électronique (12) étant prévu entre les canaux (9′), caractérisé en ce que l'on monte en aval un système de découplage (12) complétant le circuit d'exploitation (9′) allant à un régulateur à deux variables, après les deux canaux (9′) pour compenser au moins en partie le couplage des roues sous la forme d'un couplage électronique, en ce que ce système de découplage (12) présente une matrice de transmission $G_{(z)}$ dont les membres $G1_{(z)}$ et $G2_{(z)}$ déterminent ses grandeurs de sortie $\underline{u}'1(z)$ et $\underline{u}'2(z)$ selon les relations $\underline{u}'1(z) = G1(z)* \tilde{\underline{u}}\,1(z) + \tilde{\underline{u}}\,2(z)$ ou $u'2(z) = G2(z)* \tilde{\underline{u}}_{]}\,1(z) + G1\,(z)\,\tilde{\underline{u}}\,2(z)$, relations dans laquelle $\tilde{\underline{u}}'_1{}_{(z)}$ et $\underline{u}'_2{}_{(z)}$ sont les signaux analogiques de sortie des canaux (9′) et les membres $G1_{(z)}$ et $G2_{(z)}$ sont fixés en vue d'un bon découplage.

2. Dispositif régulateur d'anti-blocage selon, la revendication 1, caractérisé en ce que les membranes de la matrice sont constants.

3. Dispositif régulateur d'anti-blocage selon la revendication 1 ou 2, caractérisé en ce que les membres de la matrice sont déterminés expérimentale.

4. Dispositif régulateur d'anti-blocage selon l'une des revendications 1 à 3, caractérisé en ce que le système de découplage (12) consiste en un système linéaire à deux variables (12a) et un amplificateur (12b) monté à la suite influençant dans la même mesure un signal de sortie amplificateur (12b) dont le facteur d'amplification est fonction de la grandeur du signal de sortie du système de découplage de telle sorte qu'il devienne plus petit quand l'un des signaux de sortie croît.

5. Dispositif régulateur d'anti-blocage pour les roues motrices d'un essieu contenant des détecteurs (en 25) pour déterminer la vitesse des roues, un circuit d'évaluation à deux canaux (16, 19), auquel sont amenés les signaux des vitesses des roues et qui produit les signaux de commande des pressions de freinage et des dispositifs servant à commander les pressions de freinage (23, 24) pour faire varier la pression de freinage en vue d'empêcher les roues de se bloquer, caractérisé en ce que l'on amène comme grandeur d'entrée à l'un des canaux , le canal (16) l'une des grandeurs correspondant à la somme et à l'autre canal (19) l'une des grandeurs correspondant à la différence des deux signaux de vitesse, en ce que le régulateur du premier canal (16) est un régulateur individuel de roue (par exemple un régulateur de glissement) et le régulateur du deuxième canal (19) présente une course caractéristique de régulation, qui présente au moins des parties proportionnelles et des parties intégrales et en ce que le signal de réglage pour l'organe de réglage (23) du premier canal est formé par l'addition des signaux de sortie des deux régulateurs (16, 19) et le signal de réglage pour l'organe de réglage (24) du deuxième canal est formé par la soustraction des signaux de sortie des deux régulateurs (16,19).

6. Dispositif régulateur d'anti-blocage selon la revendication 2, caractérisé en ce que l'on monte, en avant des organes de réglage, un amplificateur (22) influençant dans la même mesure les deux signaux de réglage, dont le facteur d'amplification $C_n$ est fonction de la grandeur des signaux de réglage de telle façon qu'il devienne plus petit quand les signaux de sortie augmentent.

7. Dispositif régulateur d'anti-blocage selon la revendication 5 ou 6, caractérisé en ce que le régulateur du second canal (19) est un régulateur de balayage non linéaire PI (proportionnel intégral)

$J_G$  4

$W_1$
$M_{S1}$
$M_{B1}$
1  J
3
$M_{B2}$
2  J
$W_2$
$M_{S2}$

Fig.1a

8

$M_1$  $W_F$

$M_{B1}$  +  −  5

$V_1$

$V_2$

+  6  −

∫  7

$W_1$

$$V_1 = \frac{4J + J_G}{2J(J_G + 2J)}$$

$$V_2 = \frac{J_G}{2J(J_G + 2J)}$$

$V_2$

5

$M_{B2}$  −  +

$V_1$

−  +  6

∫  7

$W_2$

$M_{S2}$  $W_F$

8

Fig.1b

Fig. 2

Fig. 3

$\tilde{\underline{U}}(Z)$ → $G(Z)$ → $\underline{U}'(Z)$ → $Cn$ → $\underline{U}(Z)$

12a          12b

Fig.4

Fig5

$\lambda = 1 - \omega/\omega_F$

Fig.6

Fig.7